# EUROPÄISCHE PATENTSCHRIFT

(11) **EP 3 033 214 B1**
(45) Veröffentlichungstag und Bekanntmachung des Hinweises auf die Patenterteilung: **24.10.2018**
(21) Anmeldenummer: 14823892.6
(22) Anmeldetag: 18.11.2014
(51) Int. Cl.: B29C 49/42, B29C 49/08, B29C 49/12, B29C 49/46, B29C 49/58, B29K 23/00, B29C 49/06, B29L 31/00, B29K 67/00

(54) **VORRICHTUNG UND VERFAHREN ZUR HERSTELLUNG STERILER BEHÄLTER**
DEVICE AND METHOD FOR PRODUCING STERILE CONTAINERS
DISPOSITIF ET PROCÉDÉ DE FABRICATION DE RÉCIPIENTS STÉRILES

(30) Priorität: 18.11.2013 DE 102013019169
(43) Veröffentlichungstag der Anmeldung: 22.06.2016
(73) Patentinhaber: KHS GmbH, 44143 Dortmund (DE)
(72) Erfinder: NIEHR, Thomas, 55583 Bad Münster am Stein-Ebernburg (DE)
(74) Vertreter: Hausfeld, Norbert
(86) Internationale Anmeldenummer: PCT/EP2014/003079
(87) Internationale Veröffentlichungsnummer: WO 2015/070991

(56) Entgegenhaltungen:
- EP-A1- 1 258 336
- FR-A1- 2 923 802

## Beschreibung

Die Erfindung betrifft Verfahren zur Handhabung von mindestens bereichsweise sterilen, ein befüllbares Innenvolumen aufweisenden Werkstücken, bei dem die Werkstücke mit einer Verschlussvorrichtung verbunden werden, mit dem die Werkstücke durch mehrere Behandlungsstationen geführt werden, wobei eine der Stationen eine Sterilisiereinrichtung ist und wobei in wenigstens einer der Behandlungsstationen ein Behandlungsorgan durch eine Durchgangsöffnung der Verschlussvorrichtung hindurch bis in das Innenvolumen des Werkstückes hineinbewegt wird. Insbesondere betrifft die Erfindung ein Verfahren zur Handhabung von Vorformlingen aus einem thermoplastischen Material zur Herstellung von blasgeformten, mindestens bereichsweise sterilen Behältern und/oder ein Verfahren zur Handhabung von aus Vorformlingen blasformend hergestellten Behältern. Dabei werden die Vorformlinge insbesondere durch mehrere Behandlungsstationen einer Blasformungsmaschine geführt, nämlich wenigstens durch eine Sterilisiereinrichtung, in der die Vorformlinge einer Sterilisierbehandlung unterzogen werden. Weiterhin kann eine Führung durch eine Heizeinrichtung erfolgen, in der die Vorformlinge thermisch für die Blasformung konditioniert werden, und/oder durch eine Blasstation, in der die Vorformlinge zu Behältern blasgeformt werden, und/oder durch Einlauf-, Ausgabe- und/oder Transfersterne, in denen die Vorformlinge und/oder die Behälter transportiert werden.

Die Erfindung betrifft weiterhin eine Verschlussvorrichtung zur Handhabung von mindestens bereichsweise sterilen, ein befüllbares Innenvolumen aufweisenden Werkstücken, mit Verbindungsmitteln zum lösbaren Verbinden des Werkstückes mit der Verschlussvorrichtung, wobei die Verschlussvorrichtung eine mit Dichtmitteln versehene Durchgangsöffnung aufweist, durch die hindurch ein Behandlungsorgan einer Behandlungsstation abgedichtet bis in das Innenvolumen des Werkstückes hineinbewegbar ist. Dabei handelt es sich bei den Werkstücken insbesondere um Vorformlinge aus einem thermoplastischen Material zur Herstellung von blasgeformten, mindestens bereichsweise sterilen Behältern und/oder um aus Vorformlingen blasformend hergestellte Behälter. Die Behandlungsstationen gehören insbesondere zu einer Blasformungsmaschine, und umfassen wenigstens eine Sterilisiereinrichtung, in der die Vorformlinge einer Sterilisierbehandlung unterzogen werden, optional zusätzlich eine Heizeinrichtung, in der die Vorformlinge thermisch für die Blasformung konditioniert werden, und/oder zusätzlich eine Blasstation, in der die Vorformlinge zu Behältern blasgeformt werden, und/oder zusätzlich Einlauf-, Ausgabe- und/oder Transfersterne, in denen die Vorformlinge und/oder die Behälter transportiert werden.

Schließlich betrifft die Erfindung eine Blasformungsmaschine mit einer Verschlussvorrichtung und die Verwendung einer Verschlussvorrichtung und einer Blasformungsmaschine zum Ausführen eines Handhabungsverfahrens.

Die Erfindung wird nachfolgend primär anhand der Abläufe und Vorgänge bei der blasformenden Herstellung von zumindest bereichsweise sterilen Behältern aus Vorformlingen und deren anschließender Befüllung erläutert, ohne dass sich die Erfindung und die Ansprüche darauf beschränken. In analoger Weise kann die Erfindung auch in Füllern und Schließern realisiert werden.

Eine Herstellung von sterilen, blasgeformten Behältern erfolgt typischerweise derart, dass diese Behälter nach ihrer Blasformung und vor einer Befüllung unter Verwendung von Wasserstoffperoxid oder von anderen Chemikalien sterilisiert werden. Ebenfalls ist es bereits bekannt, die bei der Blasformung der Behälter als Ausgangsprodukt verwendeten Vorformlinge mittels Strahlung zu sterilisieren, insbesondere den Bereich der inneren und der äußeren Oberfläche dieser Vorformlinge.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasformungsmaschine unterschiedlichen Behandlungsstationen zugeführt. Typischerweise weist eine derartige Blasformungsmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Es sind aber auch Blasformungsmaschinen bekannt, bei denen die Expansion durch Einspeisung einer Flüssigkeit unter einem Überdruck erfolgt, insbesondere durch Einspeisung des Füllgutes unter Überdruck.

Der grundsätzliche Aufbau einer mit Druckluft arbeitenden Blasstation zur Behälterformung wird in der DE-OS 42 12 583 beschrieben. Möglichkeiten zur Temperierung der Vorformlinge werden in der DE -OS 23 52 926 erläutert.

Innerhalb der Blasformungsmaschine können die Vorformlinge sowie die blasgeformten Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Handhabungseinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Es ist auch bekannt, zur Handhabung der Vorformlinge diese zunächst auf eine Tragvorrichtung aufzusetzen, und die Handhabung dann an der Tragvorrichtung und dem davon getragenen Vorformling vorzunehmen. In der DE 196 41 943 A1 wird eine solche Tragvorrichtung erläutert.

Die Handhabung der blasgeformten Behälter erfolgt in der Regel in gleicher Weise wie die Handhabung der Vorformlinge, weil die am Vorformling für die Handhabung vorgesehenen Handhabungskonturen und Handhabungsabschnitte beim Blasformungsvorgang unverändert bleiben und daher auch am blasgeformten Behälter für eine Handhabung zur Verfügung stehen.

Im Hinblick auf die verwendeten Blasstationen, in denen die Vorformlinge unter Anwendung eines unter Druck stehenden Fluides in Behälter umgeformt werden, sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik unterschiedliche Verfahren und Vorrichtungen bekannt. In der EP-A 1 086 019 A1 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig sind hierbei das Temperaturverhalten des Vorformlings während des Sterilisiervorganges sowie das unkontrollierte Austreten des Sterilisationsmittels aus dem Vorformling innerhalb der Heizung. Es besteht weiterhin die Möglichkeit einer Neuverkeimung, z.B. bereits im zweiten Heizmodul.

In der EP-A 1 896 245 A2 wird ein Verfahren beschrieben, bei dem vor der Heizung ein gasförmiges Sterilisationsmittel in einen kalten Vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus. Das Problem der Neuverkeimung in der Heizung ist ebenfalls weiter gegeben.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen. Auch dem Problem der Neuverkeimung, z.B. nach der Blasformung, wird hier nicht wirkungsvoll begegnet.

Es ist auch bekannt, Strahlungsquellen für Sterilisierungszwecke einzusetzen. Die Verwendung von UV-Strahlern für Sterilisieraufgaben ist allgemein z.B. aus der DE 295 03 830 U1 bekannt. Durch Bestrahlung mit UV-Licht soll ein von einem Schutzgehäuse eingeschlossener Raum entkeimt werden. Eine Entkeimung von Vorformlingen oder Behältern oder damit in Kontakt kommenden Elementen einer Blasformmaschine offenbart diese Schrift nicht. Die DE 10 2008 038 143 A1 offenbart, dass UV-Strahlungsemitter für die Sterilisierung der Außenwandung von Vorformlingen einsetzbar sind.

Die DE 10 2007 017 938 B4 offenbart die Verwendung von Strahlungsemittern für das Sterilisieren der inneren Oberflächen von Vorformlingen. Eine Sterilisierungssonde, die einen Strahlungsemitter trägt, wird zu diesem Zweck in den zu sterilisierenden Vorformling eingeführt. Einen vergleichbaren Stand der Technik zeigen auch die WO2010/012915 A1 und die EP 2 138 298 A2, bei der ebenfalls für die Innensterilisierung eines Vorformlings eine Strahlungsquelle in die Mündung des Vorformlings eingeführt wird. In der letztgenannten Schrift wird angegeben, dass mehrere Sterilisiereinrichtungen vorzusehen sind, nämlich wenigstens eine vor der Einrichtung, in der die Vorformlinge zu Behältern umgeformt werden, und wenigstens eine danach. Es wird insbesondere bei letztgenanntem Stand der Technik als nachteilig angesehen, dass hoher apparativer Aufwand benötigt wird.

Es ist ein grundsätzliches Problem, dass in einer Sterilisierstation sterilisierte Vorformlinge oder Behälter auf ihrem weiteren Transportweg vor einer Neuverkeimung geschützt werden müssen. Ziel ist es, unter aseptischen Füllbedingungen ein keimempfindliches Getränk abfüllen zu können. Dies setzt mindestens einen keimfreien Behälter voraus. Insofern ist es nicht ausreichend, nur den Vorformling oder den blasgeformten Behälter zu sterilisieren. Zur Vermeidung einer Neuverkeimung müssen auch zumindest diejenigen Elemente der Blasformungsmaschine steril gehalten werden, die nach der Vorformlingssterilisierung mit dem Vorformling in Kontakt kommen. Im Stand der Technik, z.B. in der EP 2 138 298 A2, wird diesem Problem dadurch begegnet, das ein die Blasformungsmaschine umgebendes Sterilgehäuse vorgesehen wird, das unter erheblichem Aufwand steril zu halten ist. Der Innenraum dieses Sterilgehäuses wird mit allem darin befindlichen Inventar sterilisiert, und nachfolgend der gesamte Innenraum vor einer Neuverkeimung geschützt. Der Konstruktions- und der Energieaufwand sind enorm und tragen erheblich zu den Herstellungskosten bei. Die gleiche Schrift schlägt zudem vor, einen zweiten Sterilisierungsschritt nach dem Blasformungsvorgang vorzunehmen. Auch dies bedeutet einen erheblichen Mehraufwand.

Die EP 1 258 336 A1 offenbart eine Blasdüse, die gegen Verkeimung dadurch geschützt ist, dass ein mit dem Vorformling in Berührung kommender Kontaktbereich anhebbar und absenkbar ist gegenüber dem umgebenden Blasdüsengehäuse, wobei in der angehobenen Position den Kontaktbereich ein Sterilluftstrom umgibt, sodass keine Neuverkeimung erfolgen kann. Die EP 1 258 336 A1 offenbart ein Verfahren und eine Vorrichtung gemäß dem Oberbegriff der Ansprüche 1 und 10.

Eine bessere Lösung zur Verhinderung der Neuverkeimung offenbart die WO 2012/083910 A1. Es wird dort kein die Blasformungsmaschine und ggf. weitere Behandlungsstationen wie Füller oder Verschließer umschließender Sterilraum vorgesehen, sondern es ist dort ein sterilgasführender Kanal gezeigt, an dem entlang der Vorformling bzw. der blasgeformte Behälter geführt wird. In dem Kanal sind Austrittsöffnungen vorgesehen, aus denen das Sterilgas zur Erzeugung eines mit Sterilgas beaufschlagten Korridors herausströmen kann. Der Vorformling bzw. der Behälter wird in diesem Sterilgaskorridor geführt und dabei von dem Sterilgas beaufschlagt und umströmt. Eine Neuverkeimung ist dadurch wirksam verhindert. Dennoch ist auch hier noch einiger Aufwand zu treiben.

Es ist daher die Aufgabe der vorliegenden Erfindung, ein Verfahren anzugeben, mit dem in einfacher Weise eine Herstellung steriler Vorformlinge oder steriler Behälter gelingt und eine Neuverkeimung auf dem weiteren Transportweg der Vorformlinge oder Behälter verhindert werden kann. Diese Aufgabe lässt sich auf beliebige Werkstücke verallgemeinern, bei denen die oben geschilderten Probleme in gleicher Weise auftreten. Eine weitere Aufgabe der vorliegenden Erfindung ist es, entsprechende Vorrichtungen anzugeben, mit denen das erfindungsgemäße Verfahren ausführbar ist.

Diese Aufgaben werden mit einem Verfahren nach Anspruch 1, mit einer Verschlussvorrichtung nach Anspruch 10, mit einer Blasformungsmaschine nach Anspruch 15 sowie mit einer Verwendung nach Anspruch 16 gelöst. Vorteilhafte Weiterbildungen sind in den Unteransprüchen angegeben und ergeben sich aus der nachfolgenden Beschreibung.

Nach dem erfindungsgemäßen Verfahren ist die Durchgangsöffnung der Verschlussvorrichtung von einem sich bei Hindurchbewegen des Behandlungsorgans durch die Öffnung öffnenden Verschlusselement verschlossen, das sich bei Entfernen des Organs wieder schließt, wobei die Verschlussvorrichtung das Innenvolumen des Werkstückes gegenüber einem Außenbereich abgedichtet verschließt. Es ist dadurch möglich, das Innenvolumen des Werkstückes gegenüber einer Umgebung zu isolieren, und bedarfsweise dennoch Zugang zum Innenvolumen zu gewähren, z.B. zur Ausführung einer Sterilisierung oder zum Hindurchführen einer Reckstange während des Blasformungsprozesses oder für das Einspeisen des unter Druck stehenden Blasfluids. Nach einer Vorformlingssterilisierung ist der isolierte Bereich steril und gegen die Umgebung abgeschlossen. Der Vorformling und die Verschlussvorrichtung führen diesen dazwischen eingeschlossenen inneren Reinraum mit sich, aufwendige Maßnahmen zur Erzeugung eines voluminösen äußeren Sterilbereiches sind nicht erforderlich. Weder die Blasformungsmaschine, noch ein Füller oder ein Verschließer sowie dazwischenliegende Transportwege müssen zwingend großräumig steril gehalten werden, solange der zwischen Vorformling und/oder Behälter einerseits und Verschlussvorrichtung andererseits eingeschlossene Sterilraum aufrechterhalten wird. Ganz allgemein liegt diesem erfinderischen Konzept die Idee zugrunde, dass der Sterilraum mit dem Vorformling bzw. mit dem Behälter mitgeführt umläuft, nämlich indem zwischen Vorformling bzw. Behälter und der Verschlussvorrichtung ein Sterilraum eingeschlossen wird. Die Verschlussvorrichtung schließt diesen Sterilraum gegen die Umgebung ab und bietet eine Schleusenfunktion, um z.B. Behandlungsorgane Durchlass zu gewähren. Diese Schleusenfunktion gewährleisten die Verschlusselemente, die eine Öffnung der Verschlussvorrichtung beherrschen.

Ein weiterer Vorteil der vorliegenden Erfindung besteht darin, dass z.B. ein Formenwechsel oder andere Produktionsumstellungen ohne Sterilraumbruch möglich sind, weil kein umgebender Sterilraum für die Blasformungs- oder Füllmaschine notwendig ist. Umrüstzeiten und Umrüstkosten lassen sich erheblich reduzieren.

Die Vorteile der erfindungsgemäßen Vorrichtung und der erfindungsgemäßen Verwendung sind die gleichen.

Die Gefahr von Neuverkeimungen ist dadurch minimiert, dass die Vorformlinge (oder die Behälter) mit der Verschlussvorrichtung verbunden werden, bevor eine Sterilisierung in der Sterilisiereinrichtung erfolgt, insbesondere wobei in der Sterilisiereinrichtung ein Sterilisierorgan durch die Durchgangsöffnung der Verschlussvorrichtung hindurchgeführt wird, um ein Sterilisiermittel in das Innenvolumen des Vorformlings einzubringen. Auf diese Weise wird auch die Verschlussvorrichtung zumindest in den dem Vorformling zugewandten Bereichen im gleichen Prozessschritt mitsterilisiert. Je nach Anordnung der Sterilisiereinrichtung in der Blasformungsmaschine kann es vorteilhaft sein, dass dies vor der Heizeinrichtung erfolgt. Denkbar ist z.B., dass der Vorformlingstransport durch die Blasformungsmaschine vom Einlauf- bis zum Auslaufbereich ausschließlich mit verbundener Verschlussvorrichtung erfolgt.

Es wird insbesondere als vorteilhaft angesehen, dass die Verbindung zwischen Verschlussvorrichtung und Vorformling bzw. Behälter frühestens nach dem Verlassen der Blasstation gelöst wird, insbesondere wobei die Verbindung erst nach einem Befüllen des blasgeformten Behälters mit einem Füllgut gelöst wird. Die Vorteile des eingeschlossenen Sterilraumes zwischen den beiden Verbindungspartnern bleiben dadurch längstmöglich erhalten und es kann ein aseptisch arbeitender Blas-Füll-Block erreicht werden.

Grundsätzlich könnte die Verschlussvorrichtung wie von Klemmdornen bekannt mit dem Vorformling bzw. dem Behälter verbunden werden. Mit Vorteil erfolgt die Verbindung aber auf der Außenseite des Werkstückes (Behälter, Vorformling), z.B. an dessen Handhabungsring und/oder am Außengewinde, die dafür eine ausreichende Stabilität und eine geeignete Kontur aufweisen. Auf diese Weise bleiben auch diejenigen Bereiche beim Sterilisierungsvorgang zugänglich, die kritisch in puncto Sterilität sind.

Auch die Abdichtung der Verschlussvorrichtung am Werkstück erfolgt bevorzugt an dessen Handhabungsring und/oder am mündungsabgewandten Ende des Außengewindes. Neben den im vorstehenden Absatz genannten Vorteilen ist dadurch möglich, das Sterilisiermittel z.B. gezielt auch über den Gewindebereich zu führen, z.B. wenn das Sterilisiermittel ein chemisches Sterilisiermittel ist, insbesondere Wasserstoffperoxid in einem strömungsfähigen Aggregatzustand, wobei insbesondere das Sterilisiermittel nach dem Durchlaufen des Innenvolumens des Vorformlings an dessen Außengewinde entlanggeführt wird. Die Verschlussvorrichtung kann dazu z.B. eine geeignete Führungskonturierung aufweisen, die eine Rückströmung des Sterilisiermittels in einem werkstückseitigen Abschnitt im Bereich des Gewindes des Vorformlings ermöglicht, z.B. durch einen dort mündenden Rückströmkanal.

Mit Vorteil sind die Verschlussvorrichtungen in einem Kreislauf geführt. In einem ersten Abschnitt des Kreislaufs sind die Verschlussvorrichtungen mit Werkstücken verbunden, in einem zweiten Abschnitt, das heißt nach Abtrennung der Werkstücke, laufen die Verschlussvorrichtungen werkstücklos um. Insbesondere ist zur Vermeidung einer Neuverkeimung der Verschlussvorrichtungen vorgesehen, dass mit Vorteil in dem zweiten Abschnitt des werkstücklosen Umlaufens eine Sterilisierung der Verschlussvorrichtungen erfolgt. Dies kann in bekannter Weise z.B. durch Einsatz chemischer Sterilisiermittel erfolgen, z.B. unter Verwendung von Wasserstoffperoxid. Es ist auch eine Sterilisierung unter Anwendung einer sterilisierenden Strahlung möglich, insbesondere unter Anwendung einer UV-Strahlung. UV-Strahler lassen sich konstruktiv einfach verwenden. Geeignete UV-Strahler sind im Stand der Technik bekannt, z.B. UV-LED's, Amalgam-Niederdrucklampen, Quecksilberdampflampen (Niederdruck, Mitteldruck, Hochdruck und Höchstdruck), Excimer-Laser, Diodenlaser.

Es werden bevorzugt UV-Strahler als Strahlungsquellen verwendet, die insbesondere in einem für die Sterilisierung geeigneten Wellenlängenbereich Strahlung emittieren, z.B. im Bereich von 180-300 nm, sei es schmal- oder breitbandig. Es wird als optimal angesehen, wenn die Strahlung intensitätsstark im Bereich um 220 nm und/oder 265 nm ist. Des Weiteren ist eine Sterilisierung mit anderen, keimtötend wirkenden Medien wie beispielsweise einem Plasma denkbar, das in dem Werkstück (Vorformling/Behälter) erzeugt oder extern erzeugt und in das Werkstück eingeleitet wird.

Die Neuverkeimung bereits sterilisierter Werkstücke (Vorformlinge/Behälter) kann noch dadurch besser verhindert werden, indem in dem zwischen Werkstück und Verschlussvorrichtung eingeschlossenen Raum ein Überdruck erzeugt wird. In einfacher Weise ist dies z.B. zum Ende des Blasprozesses dadurch möglich, dass der Blasdruck nur bis zu einem gewissen Druck abgelassen wird, der höher als der Außendruck ist. Es ist auch denkbar, unmittelbar bei der Sterilisierung einen Überdruck zu erzeugen, z.B. indem das Sterilisiermittel unter einem Überdruck zugeführt wird und ein Überdruck im Werkstück zum Ende des Sterilisierschrittes aufrechterhalten wird. Es kann dazu auch zum Ende des Sterilisierschrittes das Sterilisiermittel mit einem Sterilgas, z.B. mit Sterilluft, aus dem Vorformling herausgespült werden, z.B. unter Verbleib von Sterilgas im Vorformling unter einem Überdruck. Das erfindungsgemäße Verfahren kann auch dadurch noch weiter verbessert werden, dass zumindest derjenige Bereich der Reckstange vor oder während des Blasformungsschrittes einer Sterilisierung unterzogen wird, der in den zwischen Werkstück und Verschlussvorrichtung umschlossenen Bereich eindringt.

Nachfolgend soll die Erfindung anhand von Ausführungsbeispielen näher erläutert werden. In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Vorrichtung gemäß Figur 3 mit zusätzlicher Füller- und Verschließereinheit,
- Fig. 5: eine schematische Darstellung eines ersten Ausführungsbeispiels für eine Verschlussvorrichtung mit davon gehaltenem Werkstück; und
- Fig. 6: eine schematische Darstellung eines zweiten Ausführungsbeispiels für eine Versch lussvorrichtung.

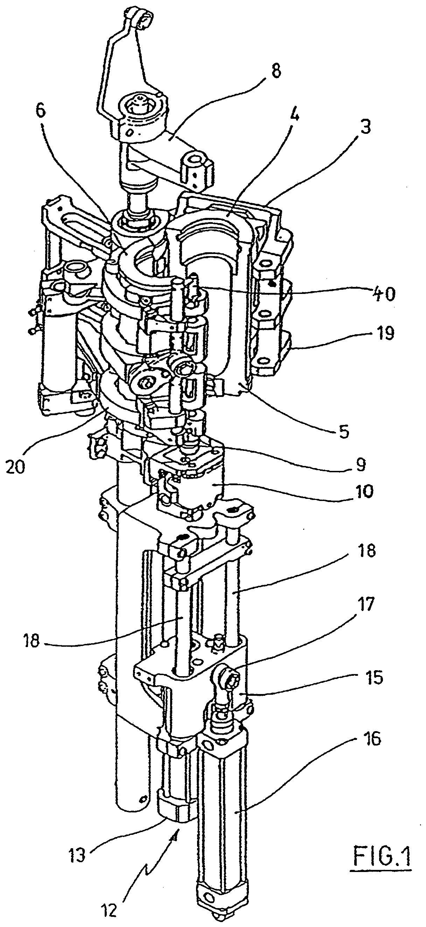

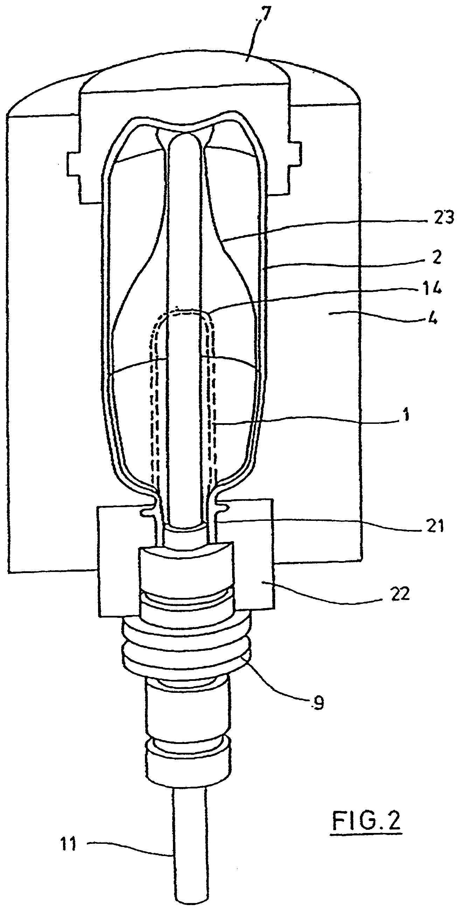

Der prinzipielle Aufbau einer Vorrichtung zur Umformung von Vorformlingen 1 in Behälter 2 ist in Fig. 1 und in Fig. 2 dargestellt.

Die Vorrichtung zur Formung des Behälters 2 (Blasmaschine) besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 ein Anschlußkolben 10 angeordnet, der dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt mit Hilfe einer Reckstange 11, die von einem Zylinder 12 positioniert wird. Grundsätzlich ist es aber auch denkbar, eine mechanische Positionierung der Reckstange 11 über Kurvensegmente durchzuführen, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad angeordnet ist. Eine Verwendung von Zylindern 12 ist zweckmäßig, wenn ortsfest angeordnete Blasstationen 3 vorgesehen sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange 11 gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

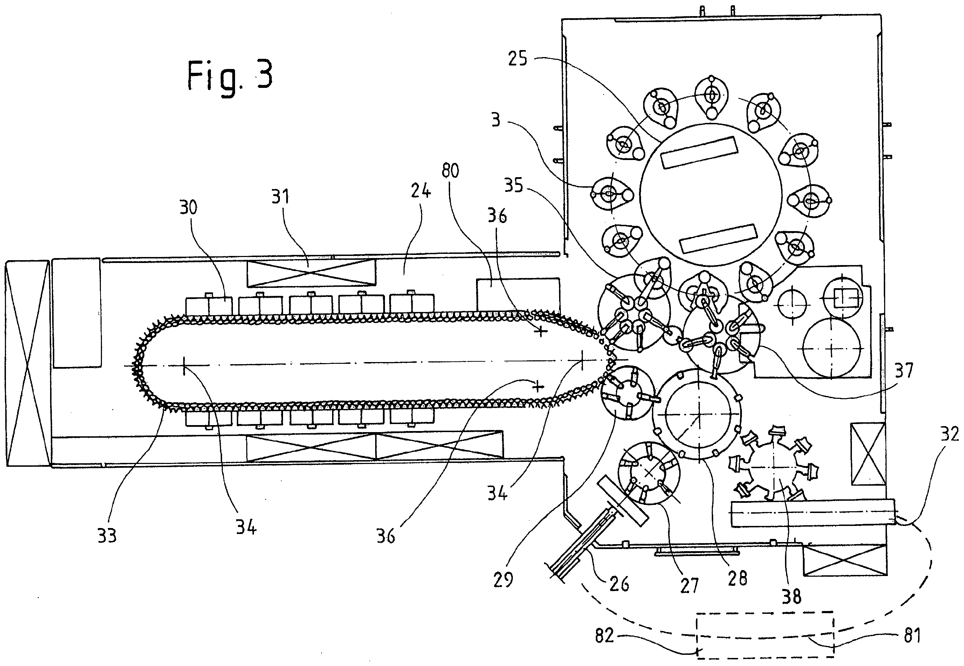

Fig. 3 zeigt den grundsätzlichen Aufbau einer Blasformungsmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet, und während der Hauptblasphase wird Druckluft mit einem Druck im Intervall von 25 bar bis 40 bar zugeführt. Für die Erreichung aseptischer Blasbedingungen wird z.B. sterile Druckluft verwendet.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35. Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

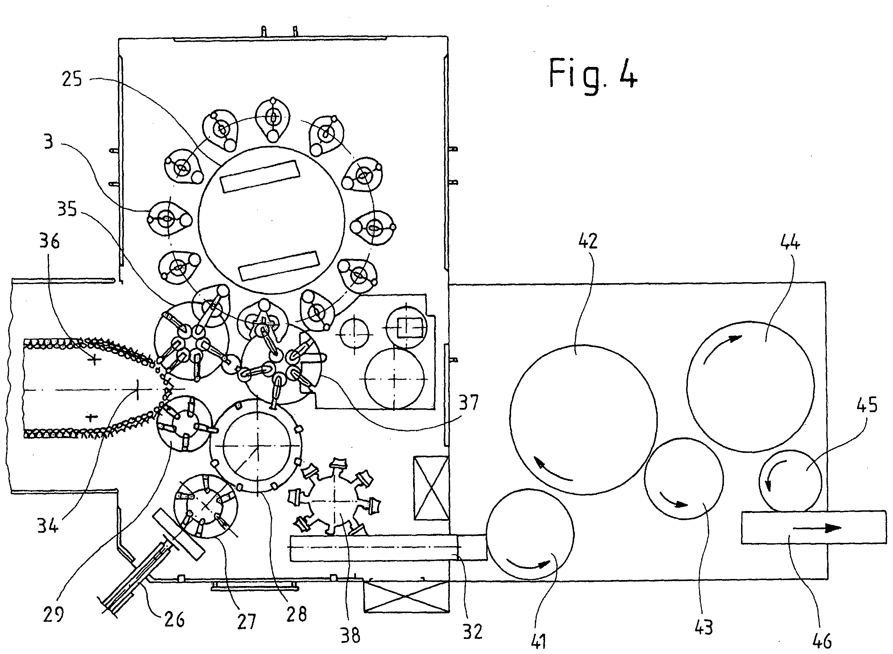

In der in Fig. 4 dargestellten modifizierten Blasformmaschine schließt sich der Ausgabestrecke 32 in verblockter Weise ein Füller-Schließer-Block an. Ein Transferrad 41 entnimmt die blasgeformten Behälter 2 der Ausgabestrecke 32 und übergibt diese auf das rotierende Füllerrad 42, auf dem mehrere umlaufende Füllstationen mit Füllorganen angeordnet sind. Nach abgeschlossenem Füllvorgang durchlaufen die gefüllten, aber noch unverschlossenen Behälter 2 den weiteren Transferstern 43 bis zu der Verschließereinheit 44, die ebenfalls rotierend mit Schließstationen ausgebildet ist, und in der die Behälter 2 verschlossen werden, z.B. durch Aufschrauben von Verschlusskappen. Nach dem Durchlaufen des Entnahmesterns 45 verlassen die gefüllten und verschlossenen Behälter 2 den Füller-Verschließer-Block über die Ausgabeeinheit 46.

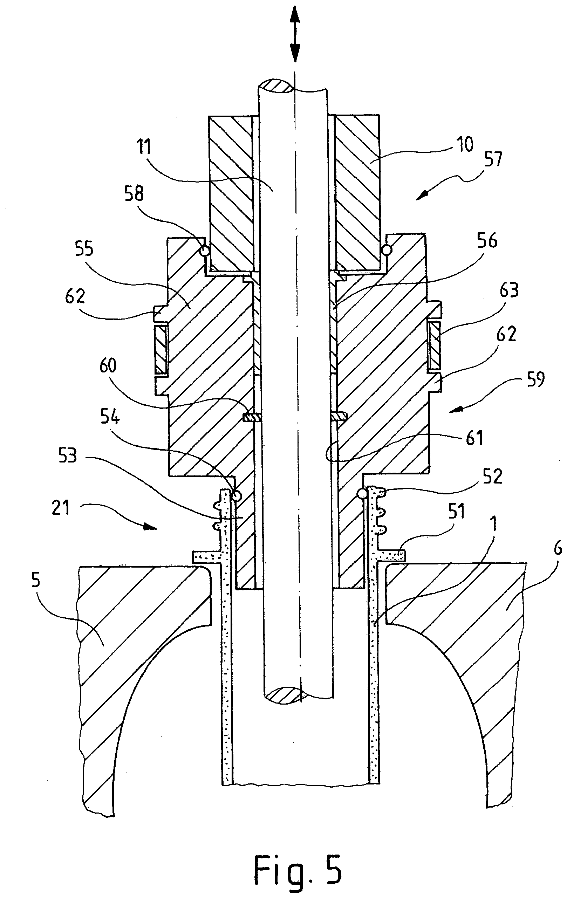

Fig. 5 zeigt in einer schematischen Darstellung ein erstes Ausführungsbeispiel für eine erfindungsgemäße Verschlussvorrichtung, die ohne Einschränkung des grundsätzlichen Erfindungsgedankens als Tragelement 59 für ein Werkstück ausgebildet ist. Gezeigt ist das erfindungsgemäße Tragelement 59 mit einem davon gehaltenen Werkstück in Form eines Vorformlings 1, von dem nur der Mündungsbereich 21 mit Neckring 51 und Außengewinde 52 dargestellt ist. Der Vorformling 1 ist in einer Blasstation 3 mit den Blasformhälften 5, 6 angeordnet dargestellt.

Das Tragelement 59 ragt mit einem Halteabschnitt 53 durch die Mündung 21 hindurch in das Vorformlingsinnere hinein. Der Vorformling 1 klemmt auf einem außenseitig auf dem Halteabschnitt 53 angeordneten elastischen Dichtring 54 und wird dadurch vom in der Art eines Klemmdorns ausgestalteten Tragelement 59 gehalten. Das Tragelement 59 weist über seine gesamte axiale Erstreckung als Durchgangsöffnung 61 eine zentrale Bohrung auf, die sich vorformlingsseitig vom Halteabschnitt 53 durch den Hauptkörper 55 hindurch bis zu seinem vorformlingsabgewandten Ende erstreckt. Dieses vorformlingsabgewandte Ende der Durchgangsöffnung 61 ist in einem Grundzustand von einem Duckbill-Ventil 56 gegen Keimeintritt verschlossen.

Im dargestellten Zustand der Fig. 5 liegt an einem Kontaktabschnitt 57 des Hauptkörpers 55 eine Blasdüse 10 an. Eine Dichtring 58, der an dem Kontaktabschnitt 57 angeordnet ist, sorgt für eine druckdichte Abdichtung zwischen dem Hauptkörper 55 und der Blasdüse 10. Eine Reckstange 11 durchsetzt die Blasdüse 10 und hat das Duckbill-Ventil 56 beim Hineinführen in die Durchgangsöffnung 61 in den gezeigten geöffneten Zustand versetzt. Nach dem Entfernen der Reckstange geht das Duckbill-Ventil 56 selbsttätig in den geschlossenen Zustand zurück. In bekannter Weise dient die Reckstange 11 der Reckung des Vorformlings 1 bei der gewünschten biaxialen Orientierung des Vorformlingsmaterials während des Blasformungsprozesses. Die Durchgangsöffnung 61 ist über seine gesamte Länge von der Reckstange 11 durchlaufen. Eine Abdichtung zur Reckstange 11 erfolgt dabei mittels einer Ringlippendichtung 60, die sich querschnittsverengend vom Hauptkörper 55 radial nach innen in die Durchgangsöffnung 61 hinein erstreckt, so dass zugeführte Druckluft, z.B. durch die Reckstange hindurch zugeführte sterile Druckluft, nicht entweichen kann.

Auf seinen zylindrischen Seitenflächen weist der Hauptkörper 55 zu Zwecken der Handhabung durch Handhabungsmittel der Blasformungsmaschine Handhabungselemente auf, im gezeigten Ausführungsbeispiel in Form von zwei beabstandet und äquidistant in einer horizontalen Ebene umlaufende Rippen 62, an denen handhabend angegriffen werden kann, z.B. von im Stand der Technik bekannten zangenartigen Handhabungsmitteln. Zusätzlich ist zwischen diesen Rippen 62 ein Magnetring 63 angeordnet, so dass auch ein magnetischer Handhabungseingriff möglich ist.

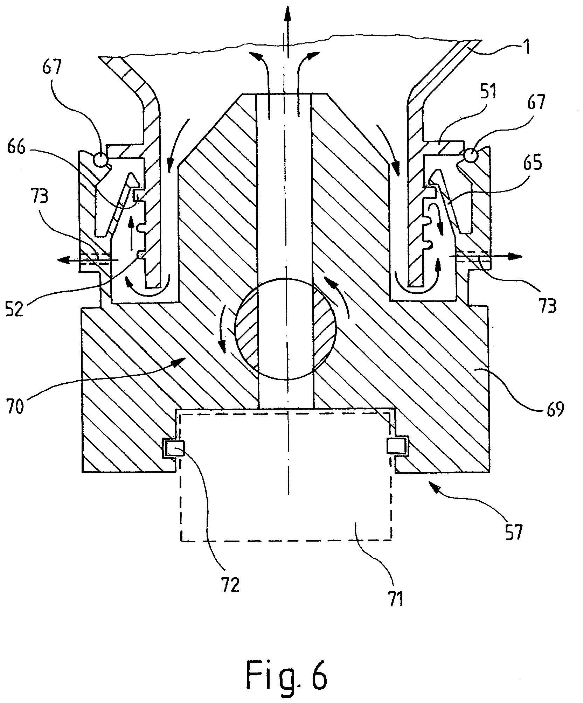

Fig. 6 zeigt in einer schematischen Darstellung ein zweites Ausführungsbeispiel für eine ebenfalls als Tragelement 69 ausgebildete erfindungsgemäße Verschlussvorrichtung. Anders als in Fig. 5 greift das Tragelement nicht in den Vorformling 1 hinein, sondern greift außen am Vorformling 1 an. Radial federnde Rastnasen 65 hintergreifen den bodenseitig des Gewindes 52 angeordneten umlaufenden Sicherungsring 66, während ein Dichtelement 67 des Tragelementes 69 gegen den Neckring 51 des Vorformlings 1 gedrückt ist. Die zentrale Durchgangsöffnung 61 des Tragelementes 69 wird von einem Kugelventil 70 beherrscht, das in einem geöffneten und für die Durchführung eines Behandlungsorgans oder für das Einleiten eines Mediums geeigneten Zustand gezeigt ist. Bei geschlossenem Kugelventil 70 und aufgrund der dichtenden Anlage des Trageelementes 69 am Vorformling 1 ist das Vorformlingsinnere gegen einen Außenbereich abgeschlossen; ein Keimeintritt ist zuverlässig verhindert.

Auf seiner vorformlingsabgewandten Seite weist auch das Tragelement 69 einen Kontaktbereich 57 auf, an dem abgedichtet ein Sterilisierorgan 71 angeschlossen ist. Auch hier erfolgt eine Abdichtung zwischen Tragelement 69 und Sterilisierorgan 57 durch eine dazwischen angeordnete Ringdichtung 72. Wahlweise kann diese Ringdichtung 72 am Sterilisierorgan 71 oder wie dargestellt am Tragelement 69 angeordnet sein.

Von dem Sterilisierorgan 71 wird ein sterilisierendes chemisches Fluid in die Durchgangsöffnung 61 eingespeist und tritt in den Vorformling 1 in Richtung der dargestellten Pfeile aus. Die Strömungsführung ist dabei im gezeigten Beispiel so gewählt, dass das sterilisierende Fluid nach dem Austritt aus einem in den Vorformling 1 hineinragenden dornartigen Bereich des Tragelementes 69 zunächst in Bodenrichtung des Vorformlings 1 strömt, um die Innenwandung des Vorformlings 1 zuverlässig und möglichst vollständig zu überstreichen und zu sterilisieren. Die Rückströmung des sterilisierenden Fluids erfolgt außen an dem dornartigen Bereich entlang; das Fluid überstreicht dadurch auch die keimkritischen, dem Vorformling 1 zugewandten Bereiche des Tragelementes 69 und führt auch hier zu einer gewünschten Keimfreiheit. Das Fluid strömt aus dem Vorformling 1 heraus und wird durch einen zwischen dem Vorformling 1 und dem Tragelement 69 gebildeten Kanal in Pfeilrichtung an dem Außengewinde 52 entlanggeführt, bevor es durch Auslassöffnungen 73 des Tragelementes 69 entweichen kann bzw. zurückgeführt wird. Die Auslassöffnung 73 ist in nicht dargestellter Weise gegen Keimeindringen gesichert, z.B. durch ein Rückschlagventil.

Mit Bezugnahme auf die Figuren 3 und 4 kann das erfindungsgemäße Tragelement z.B. noch vor der Heizstrecke 24 im Bereich des Einlaufsterns 27 mit den einlaufenden Vorformlingen 1 verbunden werden. Die weitere Handhabung könnte dann durch Angreifen an dem Tragelement erfolgen. Nach Verbinden von Tragelement und Vorformling 1 ist der von diesen beiden verbundenen Elementen eingeschlossene Innenraum gegen das Eindringen von Keimen geschützt.

Das Verbinden von Vorformling und Tragelement sollte vor der Sterilisiereinrichtung 80 erfolgen, die im in Fig. 3 dargestellten Ausführungsbeispiel im auslaufseitigen Bereich der Heizstrecke 24 angeordnet dargestellt ist. Nach Durchlaufen der Sterilisiereinrichtung 80 ist der eingeschlossene Innenraum des Vorformlings 1 keimfrei und wird durch das Tragelement auf seinem weiteren Transportweg keimfrei gehalten. In einer möglichen Ausgestaltung der Erfindung durchläuft die verbundene Einheit aus Vorformling 1 und Tragelement die Heizstrecke 24, die Sterilisiereinrichtung 80, das Blasrad 25 (wobei nach dem Blasrad eine Einheit aus Behälter und Tragelement vorliegt) und die dazwischen angeordneten Transporteinrichtungen, wie z.B. die dargestellten Übergabesterne. Eine Trennung der Einheit kann z.B. ausgangsseitig der Blasformungsmaschine erfolgen, und die freien Tragelemente können dann auf einem Rücktransportweg 81 ihrer erneuten Verwendung zugeführt werden. Auf diesem Rücktransportweg 81 kann eine weitere Sterilisiereinrichtung 82 angeordnet sein, die die Tragelemente einer vollständigen Sterilisierung unterzieht.

Insbesondere bei einer verblockten Anordnung einer Blasformungsmaschine mit einem Füller und/oder Verschließer erlaubt die Erfindung auch eine Ausführungsvariante, bei der die Einheit aus Behälter und Tragelement von der Blasformungsmaschine an den Füller und/oder an den Verschließer übergeben wird und als Einheit den Füller und/oder den Verschließer durchläuft.

Alternative erfindungsgemäße Verschlussvorrichtungen können ohne Halte- oder Tragefunktion ausgebildet sein. Hierbei werden die Werkstücke beispielsweise von Zangen oder anderen geeigneten Haltevorrichtungen getragen, während die Verschlussvorrichtung wie beschrieben einen Innenraum der Werkstücke zugänglich verschließt und lediglich mit dem Werkstück verbunden ist, aber keine oder keine wesentliche Trage- oder Haltefunktion für das Werkstück hat, sondern sich auf die Verschluss- und Schleusenfunktion beschränkt.

## Patentansprüche

1. Verfahren zur Handhabung von mindestens bereichsweise sterilen, ein befüllbares Innenvolumen aufweisenden Werkstücken (1, 2), bei dem die Werkstücke (1, 2) mit jeweils einer Verschlussvorrichtung (9, 59, 69) verbunden werden, und mit denen die Werkstücke (1, 2) durch mehrere Behandlungsstationen (3, 24, 25, 27, 28, 42, 44) geführt werden, wobei eine der Stationen eine Sterilisiereinrichtung (80) ist und wobei in wenigstens einer der Behandlungsstationen (3, 24, 25, 27, 28, 42, 44) ein Behandlungsorgan (11) durch eine Durchgangsöffnung (61) der Verschlussvorrichtung (9, 59, 69) hindurch bis in das Innenvolumen des Werkstückes (1, 2) hineinbewegt wird, **dadurch gekennzeichnet, dass** die Durchgangsöffnung (61) der Verschlussvorrichtung (9, 59, 69) von einem sich bei Hindurchbewegen des Behandlungsorgans (11) öffnenden Verschlusselement (56, 70) verschlossen ist, das sich bei Entfernen des Organs (11) wieder schließt, wobei die Verschlussvorrichtung (9, 59, 69) das Innenvolumen des Werkstückes (1, 2) gegenüber einem Außenbereich abgedichtet verschließt.

2. Verfahren nach Anspruch 1, **dadurch gekennzeichnet, dass** es sich bei den Werkstücken um Vorformlinge (1) aus einem thermoplastischen Material zur Herstellung von blasgeformten, mindestens bereichsweise sterilen Behältern (2) und/oder um aus Vorformlingen (1) blasformend hergestellte Behälter (2) handelt.

3. Verfahren nach Anspruch 2, **dadurch gekennzeichnet, dass** die Vorformlinge (1) durch mehrere Behandlungsstationen (3, 24, 25, 27, 28, 42, 44) einer Blasformungsmaschine geführt werden, nämlich wenigstens durch eine Sterilisiereinrichtung (80), in der die Vorformlinge (1) einer Sterilisierbehandlung unterzogen werden, insbesondere zusätzlich durch eine Heizeinrichtung (24), in der die Vorformlinge (1) thermisch für die Blasformung konditioniert werden, und/oder zusätzlich durch eine Blasstation (3), in der die Vorformlinge (1) zu Behältern (2) blasgeformt werden, und/oder zusätzlich durch Einlauf-, Ausgabe- und/oder Transfersterne (27, 28, 29, 35, 37, 38, 41, 43), in denen die Vorformlinge (1) und/oder die Behälter (2) transportiert werden.

4. Verfahren nach Anspruch 3, **dadurch gekennzeichnet, dass** die Vorformlinge (1) mit der Verschlussvorrichtung (9, 59, 69) verbunden werden, bevor eine Sterilisierung in der Sterilisiereinrichtung (80) erfolgt, insbesondere wobei in der Sterilisiereinrichtung (80) ein Sterilisierorgan durch die Durchgangsöffnung (61) der Verschlussvorrichtung (9, 59, 69) hindurchgeführt wird, um ein Sterilisiermittel in das Innenvolumen des Vorformlings (1) einzubringen, insbesondere wobei die Verbindung vor der Heizeinrichtung (24) erfolgt, insbesondere wobei die Verbindung frühestens nach dem Verlassen der Blasstation (3) gelöst wird, insbesondere wobei die Verbindung erst nach einem Befüllen des blasgeformten Behälters (2) mit einem Füllgut gelöst wird.

5. Verfahren nach einem der Ansprüche 2 bis 4, wobei das Werkstück (1, 2) eine einem geschlossenen Boden gegenüberliegende Mündung (21), einen Handhabungsring (51) und ein Außengewinde (52) aufweist, das mündungsseitig vom Handhabungsring (51) angeordnet ist, **dadurch gekennzeichnet, dass** die Verbindung der Verschlussvorrichtung (9, 59, 69) am Werkstück (1, 2) an dessen Handhabungsring (51) und/oder am Außengewinde (52) erfolgt.

6. Verfahren nach dem Oberbegriff von Anspruch 5 und nach einem der Ansprüche 2 bis 5, **dadurch gekennzeichnet, dass** eine Abdichtung der Verschlussvorrichtung (9, 59, 69) am Werkstück (1, 2) an dessen Handhabungsring (51) und/oder am mündungsabgewandten Ende des Außengewindes (52) erfolgt.

7. Verfahren nach Anspruch 4 und nach dem Oberbegriff von Anspruch 5, **dadurch gekennzeichnet, dass** als Sterilisiermittel ein chemisches Sterilisiermittel verwendet wird, insbesondere Wasserstoffperoxid in einem strömungsfähigen Aggregatzustand, wobei insbesondere das Sterilisiermittel nach dem Durchlaufen des Innenvolumens am Außengewinde (52) entlanggeführt wird.

8. Verfahren nach einem der vorhergehenden Ansprüche, **dadurch gekennzeichnet, dass** die Verschlussvorrichtungen (9, 59, 69) in einem Kreislauf geführt sind, wobei die Verschlussvorrichtungen (9, 59, 69) in einem ersten Abschnitt mit einem Werkstück (1, 2) verbunden umlaufen und in einem zweiten Abschnitt werkstücklos umlaufen, wobei insbesondere in dem zweiten Abschnitt des werkstücklosen Umlaufens eine Sterilisierung der Verschlussvorrichtungen (9, 59, 69) erfolgt, insbesondere eine Sterilisierung unter Anwendung eines Sterilisationsmittels oder einer sterilisierenden Strahlung, insbesondere unter Anwendung einer UV-Strahlung.

9. Verfahren nach einem der vorgehenden Ansprüche, **dadurch gekennzeichnet, dass** die Verschlussvorrichtungen (9, 59, 69) jeweils als Tragvorrichtungen (9, 59, 69) ausgebildet sind, die die Werkstücke (1, 2) tragen oder haltern.

10. Verschlussvorrichtung (9, 59, 69) zur Handhabung von mindestens bereichsweise sterilen, ein befüllbares Innenvolumen aufweisenden Werkstücken (1, 2), mit Verbindungsmitteln (54, 65) zum lösbaren Verbinden des Werkstückes (1, 2) mit der Verschlussvorrichtung (9, 59, 69), wobei die Verschlussvorrichtung (9, 59, 69) eine mit Dichtmitteln (60, 72) versehene Durchgangsöffnung (61) aufweist, durch die hindurch ein Behandlungsorgan (11) einer Behandlungsstation (3, 24, 25, 27, 28, 42, 44) abgedichtet bis in das Innenvolumen des Werkstückes (1, 2) hineinbewegbar ist, wobei eine der Stationen eine Sterilisiereinrichtung (80) ist, **dadurch gekennzeichnet, dass** die Verschlussvorrichtung (9, 59, 69) ein die Durchgangsöffnung (61) verschließendes Verschlusselement (56, 70) aufweist, das ausgebildet ist, sich bei Hindurchbewegen des Behandlungsorgans (11) durch die Durchgangsöffnung (61) zu öffnen und sich bei Entfernen des Organs (11) wieder zu schließen, wobei die Verschlussvorrichtung (9, 59, 69) weiterhin auf einem werkstückseitigen Abschnitt das Innenvolumen des Werkstückes (1, 2) gegenüber einem Außenbereich abdichtend verschließende und in Gebrauchsstellung am Werkstück (1, 2) anliegende Abdichtmittel (67, 54) aufweist, wobei insbesondere das Werkstück ein Vorformling (1) aus einem thermoplastischen Material zur Herstellung von blasgeformten, mindestens bereichsweise sterilen Behältern (2) und/oder ein aus Vorformlingen (1) blasformend hergestellter Behälter (2) ist, und wobei die Behandlungsstationen (3, 24, 25, 27, 28, 42, 44) Behandlungsstationen einer Blasformungsmaschine sind, und wenigstens eine Sterilisiereinrichtung (80) umfassen, in der die Vorformlinge (1) einer Sterilisierbehandlung unterzogen werden, insbesondere zusätzlich eine Heizeinrichtung (24) umfassen, in der die Vorformlinge (1) thermisch für die Blasformung konditioniert werden, und/oder zusätzlich eine Blasstation (3) umfassen, in der die Vorformlinge (1) zu Behältern (2) blasgeformt werden, und/oder zusätzlich Einlauf-, Ausgabe- und/oder Transfersterne (27, 28, 29, 35, 37, 38, 41, 43) umfassen, in denen die Vorformlinge (1) und/oder die Behälter (2) transportiert werden.

11. Verschlussvorrichtung nach Anspruch 10, **dadurch gekennzeichnet, dass** die Verbindungsmittel (54, 65) und/oder die Abdichtmittel (67, 54) angeordnet und ausgebildet sind, in Gebrauchsstellung außenseitig am Werkstück (1, 2) anzugreifen, wobei die Verbindungsmittel (54, 65) und/oder die Abdichtmittel (67, 54) bei Werkstücken (1, 2), die eine einem geschlossenen Boden gegenüberliegende Mündung (21), einen Handhabungsring (51) und ein Außengewinde (52) aufweisen, das mündungsseitig vom Handhabungsring (51) angeordnet ist, angeordnet und ausgebildet sind, am Handhabungsring (51) und/oder am Außengewinde (52) anzugreifen.

12. Verschlussvorrichtung nach Anspruch 10 oder 11, **dadurch gekennzeichnet, dass** auf der werkstückabgewandten Seite der Vorrichtung einen Kopplungsabschnitt (57) angeordnet ist mit Dichtmitteln (58, 72) zur abgedichteten Ankopplung von Behandlungsorganen (11), insbesondere zur abgedichteten Ankopplung einer Blasdüse (10) einer Blasstation (3) und/oder zur abgedichteten Ankopplung eines Sterilisierorgans (71) einer Sterilisiereinrichtung (80).

13. Verschlussvorrichtung nach einem der vorhergehenden Ansprüche 10 bis 12, **dadurch gekennzeichnet, dass** die Durchgangsöffnung (61) zur abgedichteten Durchführung einer Reckstange (11) einer Blasstation (3) ausgebildet ist.

14. Verschlussvorrichtung nach einem der vorhergehenden Ansprüche 10 bis 13, **dadurch gekennzeichnet, dass** die Verschlussvorrichtung ausgebildet ist als Tragvorrichtung mit Handhabungsmitteln (62, 63), die in Gebrauchsstellung mit korrespondierenden Handhabungsmitteln von Behandlungsstationen (3, 24, 25, 27, 28, 42, 44) zusammenwirken, um die Verschlussvorrichtung (9, 59, 69) zusammen mit dem davon getragenen Werkstück (1, 2) durch mehrere Behandlungsstationen (3, 24, 25, 27, 28, 42, 44) zu führen, wobei eine der Stationen eine Sterilisiereinrichtung (80) ist.

15. Blasformungsmaschine, **gekennzeichnet durch** wenigstens eine Verschlussvorrichtung (9, 59, 69) nach einem der vorhergehenden Ansprüche 10 bis 14.

16. Verwendung einer Vorrichtung nach einem der Ansprüche 10 bis 15 zum Ausführen eines Verfahrens nach einem der Ansprüche 1 bis 9.

## Claims

1. A method for handling workpieces (1, 2) that are sterile at least in certain regions and have a fillable internal volume, in which the workpieces (1, 2) are each being connected to a closing device (9, 59, 69) with which the workpieces (1, 2) are passed through a plurality of treatment stations (3, 24, 25, 27, 28, 42, 44), wherein
one of the stations is a sterilising facility (80) and wherein, in at least one of the treatment stations (3, 24, 25, 27, 28, 42, 44), a treatment element (11) is moved through a through opening (61) of the closing device (9, 59, 69) and into the internal volume of the workpiece (1, 2),
**characterised in that**
- the through opening (61) of the closing device (9, 59, 69) is closed by a closing element (56, 70) that is opening when the treatment element (11) is moving therethrough and that closes again when the element (11) is removed, wherein the closing device (9, 59, 69) closes the internal volume of the workpiece (1, 2) against an outside region in a sealing manner.

2. The method in accordance with Claim 1, **characterised in that** the workpieces are preforms (1) made of thermoplastic material for producing blow moulded containers (2) that are sterile at least in certain regions and/or containers (2) that are produced from preforms (1) in a blow moulding process.

3. The method in accordance with Claim 2, **characterised in that** the preforms (1) are passed through a plurality of treatment stations (3, 24, 25, 27, 28, 42, 44) of a blow moulding machine, i.e. at least through a sterilising facility (80) in which the preforms (1) are subjected to a sterilising treatment, particularly in addition through a heating device (24) in which the preforms (1) are thermally conditioned for the blow moulding process, and/or in addition through a blowing station (3) in which the preforms (1) are blow moulded to obtain containers (2) and/or in addition through inlet, output and/or transfer stars (27, 28, 29, 35, 37, 38, 41, 43) in which the preforms (1) and/or the containers (2) are transported.

4. The method in accordance with Claim 3, **characterised in that** the preforms (1) are being connected to the closing device (9, 59, 69) before sterilisation takes place in the sterilising facility (80), in particular wherein, in the sterilising facility (80), a sterilising element is passed through the through opening (61) of the closing device (9, 59, 69) in order to introduce a sterilising agent into the internal volume of the preform (1), particularly wherein the connection is made upstream of the heating device (24), particularly wherein the connection is severed not earlier than after leaving the blowing station (3), particularly wherein the connection is only severed after the blow moulded container (2) has been filled with filling material.

5. The method in accordance with any one of Claims 2 to 4, wherein the workpiece (1, 2) has an outlet (21) opposite to a closed bottom, a handling ring (51) and an external thread (52) that is arranged on the side of the handling ring (51) facing the outlet, **characterised in that** the connection of the closing device (9, 59, 69) to the workpiece (1, 2) is made at the handling ring (51) thereof and/or at the external thread (52).

6. The method in accordance with the preamble of Claim 5 and in accordance with any one of Claims 2 to 5, **characterised in that** the closing device (9, 59, 69) is sealed against the workpiece (1, 2) at the handling ring (51) thereof and/or at the end of the external thread (52) facing away from the outlet.

7. The method in accordance with Claim 4 and in accordance with the preamble of Claim 5, **characterised in that** a chemical sterilising agent is used as sterilising agent, more particularly hydrogen peroxide in a flowable state of aggregation, wherein, in particular, the sterilising agent is passed along the external thread (52) after having flown through the internal volume.

8. The method in accordance with any one of the preceding claims, **characterised in that** the closing devices (9, 59, 69) are led in a circuit, wherein the closing devices (9, 59, 69) circulate connected to a workpiece (1, 2) in a first section and circulate without a workpiece in a second section, wherein a sterilisation of the closing devices (9, 59, 69) takes place particularly in the second section of the circulation without workpiece, more particularly a sterilisation using a sterilising agent or sterilising radiation, more particularly using UV radiation.

9. The method in accordance with any one of the preceding claims, **characterised in that** the closing devices (9, 59, 69) are each formed as supporting devices (9, 59, 69) which support or hold the workpieces (1, 2).

10. A closing device (9, 59, 69) for handing workpieces (1, 2) that are sterile at least in certain regions and have a fillable internal volume, having connection means (54, 65) for connecting the workpiece (1, 2) to the closing device (9, 59, 69) in a severable manner, wherein the closing device (9, 59, 69) has a through opening (61) provided with sealants (60, 72), with a treatment element (11) of a treatment station (3, 24, 25, 27, 28, 42, 44) being movable through said through opening (61) and into the internal volume of the workpiece (1, 2) in a sealing manner, wherein one of the stations is a sterilising facility (80), **characterised in that** the closing device (9, 59, 69) has a closing element (65, 70) closing the through opening (61), said closing element (56, 70) being configured to open when the treatment element (11) is moved through the through opening (61) and to close again when the element (11) is removed, wherein the closing device (9, 59, 69), on a workpiece-sided section, further has sealants (67, 54) closing the internal volume of the workpiece (1, 2) against an external region in a sealing manner and resting against the workpiece (1, 2) in the position of use, wherein particularly the workpiece is a preform (1) made of thermoplastic material for producing blow moulded containers (2) that are sterile at least in certain regions and/or a container (2) produced from preforms (1) in a blow moulding process, and wherein the treatment stations (3, 24, 25, 27, 28, 42, 44) are treatment stations of a blow moulding machine and comprise at least one sterilising facility (80) in which the preforms (1) are subjected to a sterilising treatment, particularly in addition comprise a heating device (24) in which the preforms (1) are thermally conditioned for the blow moulding process, and/or in addition comprise a blowing station (3) in which the preforms (1) are blow moulded to obtain containers (2), and/or in addition comprise inlet, outlet and/or transfer stars (27, 28, 29, 35, 37, 38, 41, 43) in which the preforms (1) and/or the containers (2) are transported.

11. The closing device in accordance with Claim 10, **characterised in that** the connection means (54, 65) and/or the sealants (67, 54) are arranged and configured to engage the workpiece (1, 2) on its outside in the position of use, wherein, in the case of workpieces (1, 2) having an outlet (21) opposite to a closed bottom, a handling ring (51) and an external thread (52) arranged on the side of the handling ring (51) facing the outlet, the connection means (54, 65) and/or the sealants (67, 54) are arranged and configured to engage the handling ring (51) and/or the external thread (52).

12. The closing device in accordance with Claim 10 or 11, **characterised in that** a coupling section (57) is arranged on the side of the device facing away from the workpiece, said coupling section (57) having sealants (58, 72) for coupling treatment elements (11) in a sealing manner, more particularly for coupling a blowing nozzle (10) of a blowing station (3) in a sealing manner and/or for coupling a sterilising element (71) of a sterilising facility (80) in a sealing manner.

13. The closing device in accordance with any one of the preceding Claims 10 to 12, **characterised in that** the through opening (61) is formed to pass a stretch forming bar (11) of a blowing station (3) through the same in a sealing manner.

14. The closing device in accordance with any one of the preceding Claims 10 to 13, **characterised in that** the closing device is formed as a supporting device with handling means (62, 63) which, in the position of use, cooperate with corresponding handling means of treatment stations (3, 24, 25, 27, 28, 42, 44) to pass the closing device (9, 59, 69) through a plurality of treatment stations (3, 24, 25, 27, 28, 42, 44) together with the carried-away workpiece (1, 2), wherein one of the stations is a sterilising facility (80).

15. A blow moulding machine, **characterised by** at least one closing device (9, 59, 69) in accordance with any one of the preceding Claims 10 to 14.

16. A use of a device in accordance with any one of Claims 10 to 15 to apply a method in accordance with any one of Claims 1 to 9.

## Revendications

1. Procédé de manipulation de pièces (1, 2) au moins partiellement stériles présentant un volume intérieur pouvant être rempli, dans le cadre duquel les pièces (1, 2) sont respectivement raccordées à un dispositif d'obturation (9, 59, 69) avec lequel les pièces (1, 2) sont conduites à travers plusieurs stations de traitement (3, 24, 25, 27, 28, 42, 44), l'une des stations étant un dispositif de stérilisation (80) et un organe de traitement (11) étant, dans l'une au moins des stations de traitement (3, 24, 25, 27, 28, 42, 44), introduit à travers un orifice de passage (61) du dispositif d'obturation (9, 59, 69) jusque dans le volume intérieur de la pièce (1, 2), **caractérisé en ce que** l'orifice de passage (61) du dispositif d'obturation (9, 59, 69) est obturé par un élément d'obturation (56, 70) qui s'ouvre lors du passage de l'organe de traitement (11) et se referme lors du retrait de l'organe (11), le dispositif d'obturation (9, 59, 69) obturant le volume intérieur de la pièce (1, 2) de façon étanche par rapport à une zone extérieure.

2. Procédé selon la revendication 1, **caractérisé en ce que** les pièces sont des préformes (1) en un matériau thermoplastique destinées à la fabrication de récipients (2) moulés par soufflage en partie au moins stériles et/ou des récipients (2) moulés par soufflage à partir de préformes (1).

3. Procédé selon la revendication 2, **caractérisé en ce que** les préformes (1) traversent plusieurs stations de traitement (3, 24, 25, 27, 28, 42, 44) d'une machine de moulage par soufflage, à savoir au moins un dispositif de stérilisation (80) dans lequel les préformes (1) sont soumises à un traitement de stérilisation et notamment également un dispositif de chauffage (24) dans lequel les préformes (1) sont soumises à un conditionnement thermique en vue de leur moulage par soufflage, et/ou également une station de soufflage (3) dans laquelle les préformes (1) sont moulées par soufflage pour former des récipients (2), et/ou également des étoiles (27, 28, 29, 35, 37, 38, 41, 43) d'introduction, de sortie et/ou de transfert par lesquelles les préformes (1) et/ou les récipients (2) sont transportées.

4. Procédé selon la revendication 3, **caractérisé en ce que** les préformes (1) sont raccordées au dispositif d'obturation (9, 59, 69) avant de procéder à une stérilisation dans le dispositif de stérilisation (80), un organe de stérilisation étant notamment introduit, dans le dispositif de stérilisation (80), par l'orifice de passage (61) du dispositif d'obturation (9, 59, 69) pour injecter un agent de stérilisation dans le volume intérieur de la préforme (1), l'assemblage étant notamment réalisé avant le dispositif de chauffage (24), et cet assemblage étant notamment défait au plus tôt après la sortie de la station de soufflage (3) et notamment après seulement le remplissage du récipient (2) moulé par soufflage avec un produit de remplissage.

5. Procédé selon l'une des revendications 2 à 4, la pièce (1, 2) présentant une embouchure (21) opposée à un fond fermé, une collerette de manipulation (51) et un filetage (52) entre la collerette de manipulation (51) et l'ouverture de l'embouchure, **caractérisé en ce que** l'assemblage du dispositif d'obturation (9, 59, 69) et de la pièce (1, 2) est réalisé au niveau de sa collerette de manipulation (51) et/ou du filetage (52).

6. Procédé selon le préambule de la revendication 5 et selon l'une des revendications 2 à 5, **caractérisé en ce qu'**une étanchéification du dispositif d'obturation (9, 59, 69) au niveau de la pièce (1, 2) est réalisée au niveau de sa collerette de manipulation (51) et/ou du filetage (52) à son extrémité opposée à l'ouverture de l'embouchure.

7. Procédé selon la revendication 4 et selon le préambule de la revendication 5, **caractérisé en ce que** l'agent de stérilisation utilisé est un agent de stérilisation chimiques, notamment de l'eau oxygénée dans un état physique permettant un écoulement, l'agent de stérilisation notamment étant conduit le long du filetage (52) après son passage dans le volume intérieur.

8. Procédé selon l'une des revendications précédentes, **caractérisé en ce que** les dispositifs d'obturation (9, 59, 69) sont guidés selon un circuit, ces dispositifs d'obturation (9, 59, 69) circulant sur une première section en étant couplés à une pièce (1, 2) et sur une seconde section sans être couplés à une pièce, une stérilisation des dispositifs d'obturation (9, 59, 69) ayant notamment lieu dans cette seconde section au cours de la circulation sans pièce, la stérilisation étant notamment réalisée par application d'un agent de stérilisation ou d'un rayonnement stérilisant, notamment de rayons UV.

9. Procédé selon l'une des revendications précédentes, **caractérisé en ce que** les dispositifs d'obturation (9, 59, 69) sont respectivement réalisés sous forme de dispositifs porteurs (9, 59, 69) qui portent ou maintiennent les pièces (1, 2).

10. Dispositif d'obturation (9, 59, 69) pour la manipulation de pièces (1, 2) au moins partiellement stériles présentant un volume intérieur pouvant être rempli, avec des moyens d'assemblage (54, 65) pour l'assemblage amovible de la pièce (1, 2) et du dispositif d'obturation (9, 59, 69), le dispositif d'obturation (9, 59, 69) présentant un orifice de passage (61) doté de moyens d'étanchéification (60, 72) et à travers lequel un organe de traitement (11) d'une station de traitement (3, 24, 25, 27, 28, 42, 44) peut, de façon étanche, être déplacé jusque dans le volume intérieur de la pièce (1, 2), l'une des stations étant un dispositif de stérilisation (80), **caractérisé en ce que** le dispositif d'obturation (9, 59, 69) présente un élément d'obturation (56, 70) qui obture l'orifice de passage (61) et est réalisé de façon à s'ouvrir lors du passage de l'organe de traitement (11) par l'orifice de passage (61), et à se refermer lors du retrait de l'organe (11), le dispositif d'obturation (9, 59, 69) présentant en outre, sur une section côté pièce à traiter, des moyens d'étanchéification (67, 54) qui obturent de façon étanche le volume intérieur de la pièce (1, 2) par rapport à une zone extérieure et sont, en position d'utilisation, adjacents à la pièce (1, 2), la pièce étant notamment une préforme (1) en un matériau thermoplastique destinée à la fabrication de récipients (2) moulés par soufflage en partie au moins stériles et/ou un récipient (2) moulé par soufflage à partir de préformes (1) et les stations de traitement (3, 24, 25, 27, 28, 42, 44) étant des stations de traitement d'une machine de moulage par soufflage et comprenant au moins un dispositif de stérilisation (80) dans lequel les préformes (1) sont soumises à un traitement de stérilisation et notamment également un dispositif de chauffage (24) dans lequel les préformes (1) sont soumises à un conditionnement thermique en vue de leur moulage par soufflage, et/ou également une station de soufflage (3) dans laquelle les préformes (1) sont moulées par soufflage pour former des récipients (2), et/ou également des étoiles (27, 28, 29, 35, 37, 38, 41, 43) d'introduction, de sortie et/ou de transfert par lesquelles les préformes (1) et/ou les récipients (2) sont transportées.

11. Dispositif d'obturation selon la revendication 10, **caractérisé en ce que** les moyens d'assemblage (54, 65) et/ou les moyens d'étanchéification (67, 54) sont agencés et réalisés de façon à saisir, en position d'utilisation, la pièce (1, 2) par l'extérieur et, pour les pièces (1, 2), qui présentent une embouchure (21) opposée à un fond fermé, une collerette de manipulation (51) et un filetage (52) placé entre la collerette de manipulation (51) et l'ouverture de l'embouchure, de façon à saisir la pièce au niveau de la collerette de manipulation (51) et/ou du filetage (52).

12. Dispositif d'obturation selon la revendication 10 ou 11, **caractérisé en ce qu'**au côté du dispositif opposé à la pièce est agencée une section d'accouplement (57) avec des moyens d'étanchéification (58, 72) pour l'accouplement étanche d'organes de traitement (11), notamment pour l'accouplement étanche d'une buse de soufflage (10) d'une station de soufflage (3) et/ou pour l'accouplement étanche d'un organe de stérilisation (71) d'un dispositif de stérilisation (80).

13. Dispositif d'obturation selon l'une des revendications précédentes 10 à 12, **caractérisé en ce que** l'orifice de passage (61) est réalisé de façon à permettre le passage étanche d'une barre d'étirage (11) d'une station de soufflage (3).

14. Dispositif d'obturation selon l'une des revendications précédentes 10 à 13, **caractérisé en ce que** le dispositif d'obturation est réalisé sous forme de dispositif porteur avec des moyens de manipulation (62, 63) qui, en position d'utilisation, opèrent conjointement avec des moyens de manipulation correspondants de stations de traitement (3, 24, 25, 27, 28, 42, 44) pour transporter le dispositif d'obturation (9, 59, 69) avec la pièce (1, 2) qu'il porte pour parcourir plusieurs stations de traitement (3, 24, 25, 27, 28, 42, 44), l'une des stations étant un dispositif de stérilisation (80).

15. Machine de moulage par soufflage, **caractérisée par** au moins un dispositif d'obturation (9, 59, 69) selon l'une des revendications précédentes 10 à 14.

16. Utilisation d'un dispositif selon l'une des revendications 10 à 15 pour la mise en oeuvre d'un procédé selon l'une des revendications 1 à 9.
